# FASCICULE DE BREVET EUROPEEN

(11) **EP 2 016 735 B1**
(45) Date de publication et mention de la délivrance du brevet: **30.12.2015**
(21) Numéro de dépôt: 07731422.7
(22) Date de dépôt: 07.05.2007
(51) Int. Cl.: H04L 29/06, H04L 12/22, H04H 20/42, H04H 60/23, H04N 21/235, H04N 21/2362, H04N 21/435, H04N 21/61, H04N 21/6334, H04N 21/6405, H04N 7/16, H04N 7/167

(54) **PROCEDES DE DIFFUSION ET DE RECEPTION DE PROGRAMMES MULTIMEDIAS EMBROUILLES, TERMINAL ET TETE DE RESEAU POUR CES PROCEDES**
VERFAHREN ZUM AUSSTRAHLEN UND EMPFANGEN VON VERWÜRFELTEN MULTIMEDIAPROGRAMMEN, ENDGERÄT UND NETZWERK-ZENTRALE FÜR DIE VERFAHREN
METHODS FOR BROADCASTING AND RECEIVING SCRAMBLED MULTIMEDIA PROGRAMMES, TERMINAL AND NETWORK HEADEND FOR SAID METHODS

(30) Priorité: 09.05.2006 FR 0604081
(43) Date de publication de la demande: 21.01.2009
(73) Titulaire: Viaccess, 92057 Paris La Défense Cedex (FR)
(72) Inventeur: BOUTTELOUP, Philippe, 35340 Liffre (FR); CARLES, Philippe, 92190 Meudon (FR); CHEVALLIER, Anthony, 78210 saint Cyr l'Ecole (FR); GAVIOT, Frédéric, 75015 Paris (FR); HERVIEU, Sébastien, 75018 Paris (FR); PRIOU, Vincent, 35530 Brece (FR); THOMINET, Jean, 35830 Betton (FR)
(74) Mandataire: Blot, Philippe Robert Emile
(86) Numéro de dépôt international: PCT/FR2007/000780
(87) Numéro de publication internationale: WO 2007/128922

(56) Documents cités:
- GB-A- 2 344 978

## Description

La présente invention concerne des procédés de diffusion et de réception de programmes multimédias embrouillés, un terminal et une tête de réseau pour ces procédés.

Plus précisément, il existe des procédés de diffusion de plusieurs programmes multimédias générés par des opérateurs de service différents par l'intermédiaire d'un réseau. Dans les procédés de diffusion existants :
- chaque tête de réseau multiplexe au moins un programme multimédia embrouillé à l'aide d'un mot de contrôle et un cryptogramme de ce mot de contrôle afin d'obtenir un contenu multiplexé, puis diffuse le contenu multiplexé vers les terminaux par l'intermédiaire du réseau, et
- une ou plusieurs têtes de réseau diffusent, en parallèle des messages de service, propres à chaque opérateur de service, permettant d'adapter le fonctionnement de chaque terminal pour que celui-ci soit autorisé ou interdit d'accès aux programmes multimédias.

Il existe également des procédés de réception des programmes multimédias diffusés à l'aide du procédé de diffusion ci-dessus.

Dans les procédés de réception existants :
- chaque terminal reçoit et démultiplexe le contenu multiplexé, puis, sous réserve d'y être autorisé, déchiffre le cryptogramme du mot de contrôle, désembrouille le programme multimédia pour obtenir un flux multimédia utilisable par le terminal, le terminal étant équipé d'une mémoire, et
- chaque terminal reçoit les messages de service puis, en fonction du contenu du message de service reçu, le terminal adapte son fonctionnement de manière à être autorisé ou interdit d'accès au programme multimédia.

Le document GB2 344 978 décrit un procédé de distribution de clé cryptographique pour le désembrouillage de programmes multimédia dans des paquets de distribution destinés à plusieurs terminaux.

Les procédés de diffusion et de réception existants utilisent, par exemple, un réseau large bande tel que, par exemple, un réseau hertzien ou satellitaire ou un réseau de télécommunication IP.

Dans les procédés de diffusion et de réception existants, les messages de service d'un opérateur particulier sont incorporés au contenu multiplexé puis diffusés vers chacun des terminaux. Or, un même opérateur peut générer plusieurs programme multimédias, ce qui peut conduire à diffuser en parallèle différents contenus multiplexés pour un même opérateur de service.

De l'autre côté, généralement, le terminal ne peut recevoir et démultiplexe qu'un seul contenu multimédia à la fois.

Ainsi, lorsque cet opérateur veut transmettre un message de service à tous les terminaux aptes à recevoir et à démultiplexer au moins l'un des contenus multiplexes qu'il diffuse, il incorpore un exemplaire du même message de service dans chaque contenu multiplexe diffusé en parallèle. Cela conduit donc à démultiplier le nombre d'exemplaires diffusés du même message de service et donc à accroire la bande passante, nécessaire à la diffusion de ces messages de service. Ce problème existe même si l'opérateur regroupe ses programmes multimédias dans un nombre plus réduit de multiplex, les messages de services sont incorporés dans autant de multiplex.

Le problème est identique lorsque le réseau utilisé est, par exemple, un réseau IP. Dans ce dernier cas, les contenus multiplexés et les messages de service sont diffusés sur des adresses multicast écoutées par chacun des terminaux.

L'invention vise à remédier à ce problème dans le cas particulier où les procédés de diffusion et de réception utilisent un réseau large bande dans lequel une information peut être acheminée vers une adresse multicast, de sorte que seul un groupe de plusieurs terminaux correspondants à cette adresse multicast reçoit l'information tandis que d'autres terminaux connectés au même réseau ne reçoivent pas cette information.

L'invention a donc pour objet un procédé de diffusion de plusieurs programmes multimédias dans lequel la ou plusieurs des têtes de réseau diffusent sur une adresse multicast de référence une liste associant des identifiants des opérateurs de service à au moins une adresse multicast de service de premier niveau, l'adresse multicast de référence étant connue au préalable de tous les terminaux aptes à recevoir et à démultiplexer les contenus multiplexés diffusés et cette adresse multicast de référence étant différente de toutes les adressés multicast de diffusion.

L'invention a également pour objet un procédé de réception de plusieurs programmes multimédias diffusés à l'aide du procédé de diffusion ci-dessus dans lequel, en réponse à la diffusion de la liste sur l'adresse multicast de référence, le terminal écoute une ou plusieurs des adresses multicast de service de premier niveau spécifiées dans cette liste pour recevoir des messages de service.

Dans les procédés ci-dessus, l'adresse de référence est différente de l'ensemble des adresses multicast de diffusion. Ainsi, quel que soit le nombre de contenus multiplexés diffusés en parallèle pour le compte d'un même opérateur de service, seul un exemplaire de la liste est diffusé sur l'adresse multicast de référence afin d'être reçu par tous les terminaux. On dit alors que la liste est diffusée « out of band ». Ceci permet donc en particulier d'économiser de la bande passante.

De plus, le fait que l'adresse multicast de référence soit utilisée pour indiquer aux terminaux quelles sont les adresses multicast de service à écouter et non pas directement et systématiquement utilisées pour transmettre l'ensemble des messages de service de tous les opérateurs de service, permet de conserver la possibilité de gérer la quantité d'informations transmises sur cette adresse multicast de référence. Par exemple, les adresses multicast de service spécifiées par la liste peuvent être toutes différentes de l'adresse de référence, de sorte qu'aucun message de service ne sera transmis sur l'adresse de référence, ce qui diminue considérablement la quantité d'informations transmises sur cette adresse. A l'inverse, si la liste associe l'adresse de référence à chaque identifiant d'opérateur de service, l'ensemble des messages de service des opérateurs seront transmis à l'adresse de référence, ce qui peut correspondre à une quantité importante d'informations.

Les modes de réalisation du procédé de diffusion peuvent comporter une ou plusieurs des caractéristiques suivantes :
- la ou plusieurs des têtes de réseau diffusent sur l'adresse multicast de référence une liste dans laquelle au moins une adresse multicast de service associée à un identifiant d'opérateur est différente des autres adresses multicast de service associées à d'autres opérateurs de service ;
- la ou les têtes de réseau diffusent sur au moins l'une des adresses multicast de service de premier niveau associée à un identifiant d'opérateur de service, une table définissant au moins une adresse multicast de service de second niveau utilisée par cet opérateur.

Les modes de réalisation du procédé de réception peuvent comporter une ou plusieurs des caractéristiques suivantes :
- le terminal sélectionne dans la liste la ou les adresses multicast de service correspondant à un identifiant d'opérateur de service préenregistré dans sa mémoire, puis écoute les adresses multicast de service sélectionnées pour recevoir des messages de service et n'écoute pas les adresses multicast non sélectionnées dans cette liste ;
- en réponse à la diffusion de la table, le terminal écoute une ou plusieurs des adresses multicast de service de second niveau spécifiées dans cette table ;
- les adresses multicast de service de premier ou de second niveau sont également toutes différentes des adresses multicast de diffusion ;
- le réseau large bande est un réseau IP (Internet Protocol).

Ces modes de réalisation des procédés de diffusion et de réception présentent en outre les avantages suivants :
- utiliser des adresses multicast de service différentes pour différents opérateurs permet d'éliminer simplement et rapidement au niveau de la couche réseau les messages qui ne présentent pas d'intérêt pour le terminal,
- utiliser une table permettant de définir les adresses multicast de service de second niveau permet de hiérarchiser les adresses multicast de service, ce qui en simplifie la,gestion, et
- utiliser les adresses multicast de service différentes de toutes les adresses de diffusion permet de limiter la bande passante nécessaire pour diffuser les messages de service.

L'invention a également pour objet un terminal équipé d'un module logiciel de contrôle d'accès apte à mettre en oeuvre le procédé ci-dessus de réception.

L'invention a également pour objet une tête de réseau apte à diffuser des programmes multimédias embrouillés en mettant en oeuvre le procédé ci-dessus de diffusion.

L'invention sera mieux comprise à la lecture de la description qui va suivre, donnée uniquement à titre d'exemple non limitatif et faite en se référant aux dessins sur lesquels :
- la figure 1 est une illustration schématique de l'architecture d'un système de diffusion et de réception de programmes multimédias embrouillés,
- la figure 2 est un organigramme d'un procédé de diffusion et d'un procédé de réception de programmes multimédias embrouillés,
- la figure 3 est une illustration schématique de la structure d'une liste utilisée dans les procédés de la figure 2,
- la figure 4 est une illustration schématique de la structure d'une table utilisée dans les procédés de la figure 2,
- la figure 5 est une illustration schématique de l'architecture d'une arborescence d'adresses multicast de service utilisée dans les procédés de la figure 2,
- la figure 6 est un organigramme d'un procédé pour modifier une adresse de référence dans le système de la figure 1,
- la figure 7 est un organigramme d'un procédé pour mettre à jour des adresses multicast de service de premier niveau dans le système de la figure 1, et
- la figure 8 est un organigramme d'un procédé pour mettre à jour des adresses multicast de service de second niveau dans le système de la figure 1.

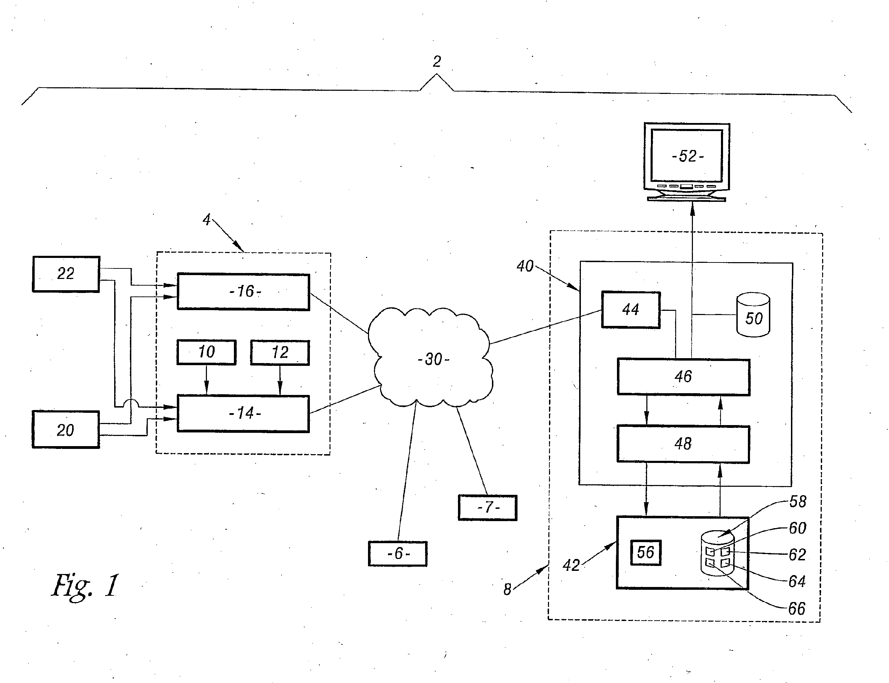

La figure 1 représente un système 2 de diffusion et de réception de programmes multimédias. Ce système 2 comprend une ou plusieurs têtes de réseau aptes à diffuser les programmes multimédias sous une forme embrouillée et une multitude de terminaux propres à recevoir ces programmes multimédias embrouillés afin de les désembrouiller pour qu'ils puissent les utiliser. Par exemple, le terminal utilise les programmes multimédias reçus pour générer un flux vidéo affichable en clair sur un écran.

Pour simplifier la figure 1, seule une tête de réseau 4 et trois terminaux 6, 7 et 8 ont été représentés.

La tête de réseau 4 comprend :
- un générateur 10 de messages ECM (Entitlement Control Message),
- un générateur 12 de messages EMM (Entitlement Management Message),
- un module 14 propre à diffuser sur une ou plusieurs adresses multicast de diffusion les contenus multiplexés, et
- un gestionnaire 16 de messages privés, appelé gestionnaire PMM (Private Messaging Manager), propre à diffuser des messages de service sur une ou plusieurs adresses multicast de service.

Le module 14 est apte à embrouiller chaque programme multimédia reçu à l'aide d'un mot de contrôle CW. Le module 14 est également apte à multiplexer le programme multimédia embrouillé avec des messages ECM générés par le générateur 10 et des messages EMM générés par le générateur 12 afin d'obtenir un contenu multiplexé. Typiquement, les messages ECM multiplexés avec le programme multimédia embrouillé contiennent un cryptogramme CW* du mot de contrôle CW utilisé pour embrouiller ce programme multimédia. Les messages ECM contiennent également généralement des conditions d'accès associées au programme multimédia embrouillé.

Les messages EMM contiennent généralement des informations, telles que des clés ou des droits, permettant d'autoriser ou d'interdire à un terminal de désembrouiller correctement les programmes multimédias embrouillés reçus pour qu'il puisse les utiliser.

Le module 14 est ici également apte à encapsuler chaque contenu multiplexé dans des trames IP (Internet Protocole).

Ici, les programmes multimédias sont générés par différents opérateurs de service. Pour simplifier la figure 1, seuls deux opérateurs 20 et 22 ont été représentés.

On suppose ici que chacun de ces opérateurs 20 et 22 est apte à générer simultanément plusieurs programmes multimédias, de sorte que le module 14 diffuse en parallèle plusieurs contenus multiplexés pour un même opérateur.

Les messages de service diffusés par le gestionnaire 16 contiennent des informations nécessaires pour que les terminaux puissent fonctionner correctement et en particulier pour que ces terminaux puissent utiliser les programmes multimédias diffusés. Ces messages de service peuvent également contenir des informations pour, au contraire, interdire l'utilisation des programmes multimédias diffusés.

Par exemple, un message de service adressé à un terminal est une requête à ce terminal pour qu'il établisse une connexion avec un serveur spécialisé de la tête de réseau de l'opérateur pour effectuer une transaction particulière. Dans un autre exemple, par un message de service approprié, l'opérateur active un mécanisme de sécurité spécifique du terminal. Dans un troisième exemple, un message de service est un moyen complémentaire de l'opérateur pour transmettre à un terminal un message EMM contenant un droit particulier.

Généralement, les messages de service sont différents d'un opérateur de service à un autre. Ici, les messages de service sont générés en réponse à des commandes transmises par les opérateurs 20 et 22.

Le réseau utilisé pour transmettre les contenus multiplexés ainsi que les messages de service aux différents terminaux est un réseau large bande 30 utilisant le protocole IP (Internet Protocol). On rappelle que ce protocole fait appel à des routeurs propres à acheminer une trame d'information vers une adresse spécifiée. Dans le protocole IP, une adresse multicast permet d'établir une liaison point à multipoints. Une telle adresse multicast diffère d'une adresse broadcast par le fait que les trames d'informations sont acheminées uniquement à un groupe limité de terminaux parmi l'ensemble des terminaux qui sont connectés au réseau 30. L'adresse multicast est également différente d'une adresse unicast qui permet uniquement d'établir une liaison point à point.

On suppose ici que les terminaux 6, 7 et 8 sont identiques et seul le terminal 8 sera décrit plus en détail.

Le terminal 8 comprend un récepteur 40 associé à un processeur de sécurité amovible 42.

Le récepteur 40 est équipé d'un modem 44, d'un module 46 de démultiplexage, désembrouillage et décodage et un module logiciel de contrôle d'accès 48.

Le récepteur 40 comprend également une mémoire 50 propre à stocker les,programmes multimédias reçus.

Le modem 44 est connecté au réseau 30 et permet de recevoir les contenus multiplexés et les messages de service diffusés par la tête de réseau 4.

Le module 46 est propre notamment à démultiplexer des contenus multiplexés reçus, à transmettre les messages ECM et EMM au module 48, à désembrouiller les programmes multimédias embrouillés de manière à générer un flux multimédia utilisable, par exemple par son décodage puis par son affichage en clair sur un écran 52 connecté au terminal 8.

Le module 48 assure l'interface avec le processeur 42. En particulier, il transmet au processeur 42 les messages ECM et EMM et reçoit de ce processeur 42 le mot de contrôle déchiffré qui doit être utilisé par le module 46 pour désembrouiller les programmes multimédias reçus.

Le processeur 42 est, par exemple, une carte à puce. Ce processeur 42 est destiné à exécuter toutes les opérations de sécurité ainsi que le contrôle d'accès aux programmes multimédias. A cet effet, il comporte notamment un module 56 de chiffrement et de déchiffrement ainsi qu'une mémoire non volatile 58. La mémoire 58 contient entre autre :
- des titres d'accès et des clés 60,
- une liste 62 d'identifiants d'opérateurs de service auprès desquels l'utilisateur du terminal 8 a souscrit un abonnement,
- une adresse multicast de référence 64 appelée @ASP, et
- une arborescence 66 d'adresses multicast de service.

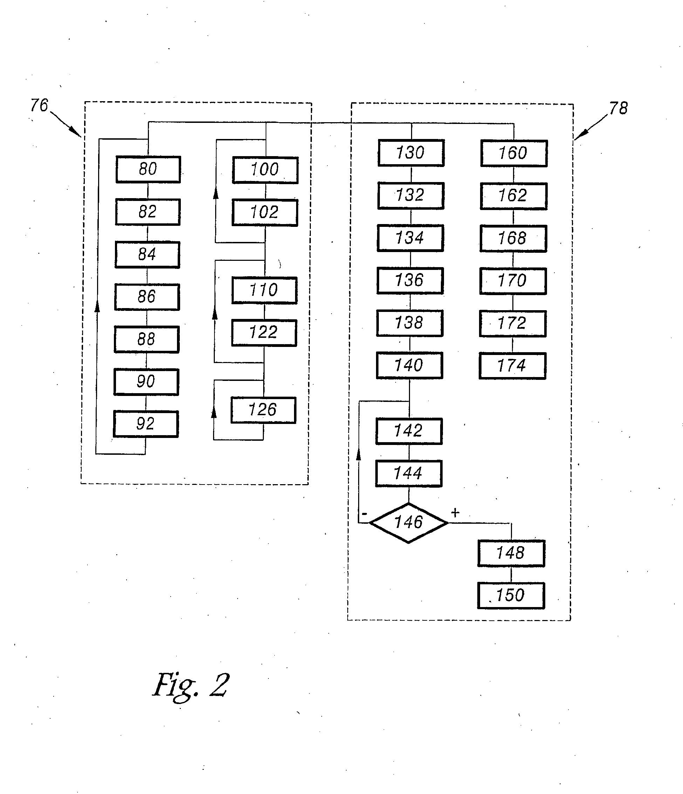

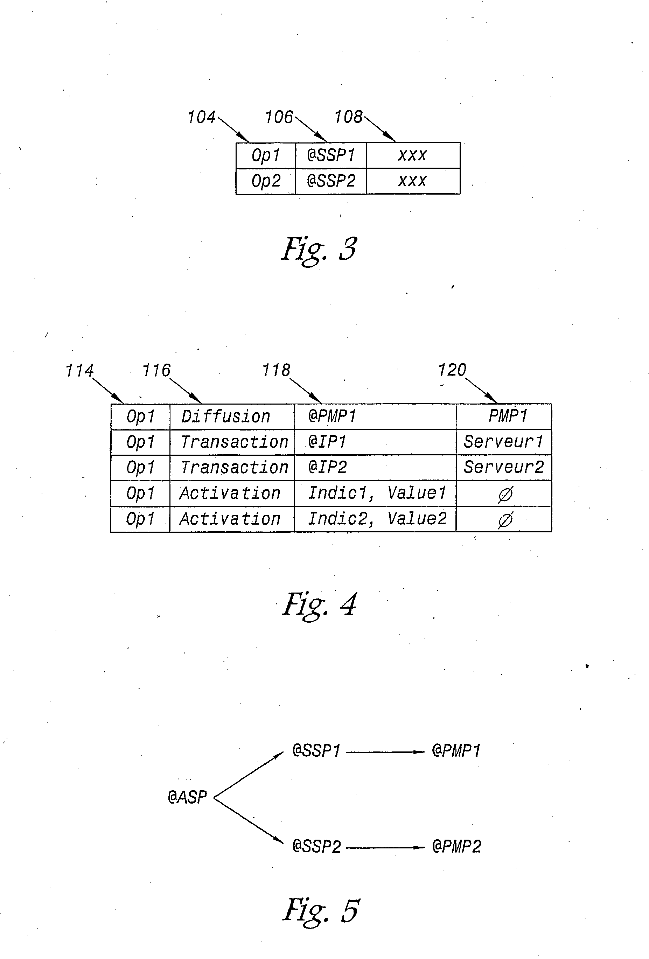

Le fonctionnement du système 2 va maintenant être décrit en regard du procédé de la figure 2 et à l'aide des structures de données illustrées sur les figures 4 à 6.

De son côté, la tête de réseau 4 exécute un procédé / 76 de diffusion des programmes multimédias embrouillés tandis que de l'autre côté chaque terminal exécute un procédé 78 de réception de ces programmes multimédias embrouillés.

Pour diffuser un programme multimédia embrouillé, la tête de réseau 4 procède comme suit :
- lors d'une étape 80, le module 14 embrouille le programme multimédia à diffuser à l'aide du mot de contrôle CW,
- lors d'une étape 82, le mot de contrôle CW est chiffré avec une clé de chiffrement Kₘ pour obtenir le cryptogramme CW*,
- lors d'une étape 84, le générateur 10 génère le message ECM contenant le cryptogramme CW* ainsi que des conditions d'accès au programme multimédia embrouillé,
- lors d'une étape 86, des messages EMM contenant, par exemple, la clé Kₘ peuvent être générés par le générateur 12,
- lors d'une étape 88, le module, 14 multiplexe le programme multimédia embrouillé, les messages ECM et les messages EMM pour obtenir un contenu multiplexé,
- lors d'une étape 90, le module 14 encapsule le contenu multiplexé dans des paquets IP (Internet Protocole),
- lors d'une étape 92, les paquets IP contenant le contenu multiplexé sont diffusés sur une adresse multicast de diffusion prédéfinie par l'opérateur ayant généré le programme multimédia embrouillé.

Les étapes 80 à 92 sont réitérées pour chaque programme multimédia de chaque opérateur de service.

En parallèle, la tête de réseau diffuse des messages de service.

Plus précisément, lors d'une étape 100, le gestionnaire 16 génère un message ASP (Address Signaling Protocol) et l'encapsule dans un datagramme UDP (User Datagram Protocol, selon la spécification RFC768). Ce message ASP contient une liste associant à des identifiants des opérateurs de service une ou plusieurs adresses multicast de service, dites de premier niveau. Un exemple de structure pour cette liste est illustré sur la figure 3. Les identifiants d'opérateurs de service sont contenus dans une colonne 104. Pour chaque identifiant d'opérateur de service, une adresse multicast de service de premier niveau est contenue dans une colonne 106. Les données présentes dans les colonne 104 et 106 suffisent au procédé. Toutefois, des données complémentaires propres à une implémentation particulière peuvent y être associées telles que représentées par la colonne 108.

Sur la figure 3, les identifiants « Op1 » et « Op2 » correspondent respectivement aux identifiants des opérateurs 20 et 22. Ces identifiants Op1 et Op2 sont respectivement associés à des adresses multicast de service @SSP1 et @SSP2. Dans cet exemple, à chaque identifiant de la colonne 104 est associée en outre une description de l'opérateur de service dans la colonne 108, représentée par le symbole « xxx » et pouvant être affichée sur le terminal.

Ensuite, lors d'une étape 102, le message ASP est diffusé sur l'adresse multicast @ASP. Cette adresse @ASP a au préalable été enregistrée dans chacun des terminaux susceptibles d'accéder à un programme- multimédia diffusé par la tête de réseau 4. Cette adresse @ASP est la même pour tous les terminaux et ceci quel que soit l'opérateur auquel l'utilisateur de ces terminaux est abonné. Ainsi tous les terminaux du système 2 peuvent recevoir le message ASP.

L'adresse @ASP de référence est une adresse IP associée à un port à écouter ou un nom de domaine. L'adresse @ASP est différente de toutes les adresses multicast de diffusion utilisées pour diffuser des contenus multimédias. Cette adresse est donc destinée à des échanges d'informations « out of band ».

Les étapes 100 et 102 sont réitérées, par exemple, toutes les minutes.

Ensuite, lors d'une étape 110, le gestionnaire 16 génère des messages SSP (Service Status Protocol) propres à chacun des opérateurs puis encapsule ces messages dans des datagrammes UDP. Le message SSP propre à chaque opérateur contient ici une table relative aux services rendus par cet opérateur et concernant les terminaux. Ces services concernent par exemple :
- la diffusion en mode multicast par l'opérateur aux terminaux d'informations individualisées ou collectives ; pour un tel service le message SSP précise les modalités de diffusion, notamment une adresse de service dite de second niveau, qu'un terminal doit prendre en compte pour accéder à ces informations.
- l'échange d'informations entre l'opérateur et le terminal lors de transactions résultant d'une connexion établie à l'initiative du terminal ; pour un tel service, le message SSP précise les modalités de la connexion à établir.
- l'activation de comportements particuliers du terminal.

La figure 4 représente un exemple d'une telle table dans le cas de l'opérateur 20.

La table de la figure 4 contient :
- l'identifiant de l'opérateur de service ayant généré cette table dans une colonne 114,
- les types de chacun des services, dans une colonne 116,
- les paramètres de chacun des services dans une colonne 118, et
- les identifiants de chacun des services, dans une colonne 120.

La nature des paramètres de services 118 et les identifiants de services 120 dépendent du type de service, tels que : référence du service de diffusion de messages et son adresse multicast, référence du serveur à appeler et son adresse IP unicast, ou désignation d'un comportement spécifique et son paramétrage particulier.

Dans le cas particulier de la figure 4, la colonne 114 rappelle l'opérateur OP1 à l'origine de la table. La colonne 116, avec les identifiants de la colonne 120, annonce un service de type diffusion de messages de service PMP1, deux services transactionnels Serveur1 et Serveur2, et deux services d'activation des comportements Indic1 et Indic2.

La colonne 118 décrit les paramètres de chacun de ces services :
- pour le service de diffusion de messages de service PMP1, la colonne 118 donne l'adresse multicast @PMP1. Cette adresse @PMP1 est utilisée par le générateur 16 sous la commande de l'opérateur 20 pour diffuser des messages de service particuliers, tels que, .par exemple, des requêtes de connexion du terminal à la tête de réseau.
- pour chaque service transactionnel Serveur 1, respectivement Serveur2, la colonne 118 précise l'adresse unicast @IP1, respectivement @IP2, à laquelle le terminal doit se connecter par une liaison point à point lorsqu'il doit exécuter une transaction avec un serveur de l'opérateur ; le choix du serveur dépend de la nature de la transaction à exécuter.
- pour chaque service d'activation de comportement, la colonne 118 précise le comportement Indic1, respectivement Indic2, à activer et les paramètres Value1, respectivement Value2, de cette activation.

Lors d'une étape 122, le message SSP généré par l'opérateur 20 est diffusé sur l'adresse @SSP1 définie dans la liste de la figure 3. De façon similaire, les messages SSP générés par l'opérateur 22 sont diffusés sur l'adresse @SSP2 associée à l'identifiant de cet opérateur dans la liste de la figure 3.

Les messages SSP d'un opérateur sont, par exemple, diffusés toutes les minutes.

Enfin, sur commande de l'opérateur 20, dans le cas d'un service de diffusion de messages de service, le générateur 16 envoie un message PMP (Private Message Protocol), lors d'une étape 126. Cette requête contient de préférence l'identifiant du terminal auquel elle est destinée ainsi que l'identifiant de l'opérateur qui l'a générée. Par exemple, le message PMP destiné à un terminal peut être une requête de connexion à un serveur de l'opérateur dont le terminal aura reçu l'adresse par un service SSP de type Transaction.

On notera que le service au niveau SSP d'activation de comportement peut également, selon l'implémentation, être supporté par un message PMP particulier.

Sous la commande de l'opérateur 22, lors de l'étape 126, le gestionnaire 16 peut également transmettre un message de service sur une adresse multicast de service @PMP2, ce message de service contenant une requête de connexion. L'adresse @PMP2 est l'adresse associée à l'identifiant PMP2 dans la colonne 120 de la table diffusée lors de l'étape 122 par l'opérateur 22. De préférence l'adresse @PMP2 est différente de l'adresse @PMP1.

De plus, en pratique, toutes les adresses utilisées pour diffuser des messages de service, c'est-à-dire ici les adresses @SSP1, @SSP2, @PMP1 et @PMP2, sont chacune différentes des adresses multicast de diffusion utilisées pour la diffusion des contenus multiplexés dans le système 2.

En parallèle aux étapes 80 à 126, chaque terminal exécute le procédé 78 de réception des programmes multimédias ainsi que des messages de service.

Initialement, lors d'une étape 130, le terminal 8 recherche l'adresse @ASP dans sa mémoire 58 puis écoute cette adresse multicast. Il reçoit alors, lors d'une étape 132, le message ASP diffusé par la tête de réseau 4. En réponse à la réception de ce message ASP, lors d'une étape 134, le terminal sélectionne uniquement les adresses contenues dans la colonne 106 qui sont associées à un identifiant d'opérateur de service correspondant à l'un de ceux contenus dans sa propre liste 62.

Ensuite, lors d'une étape 136, le terminal écoute uniquement les adresses de la liste de la figure 3 sélectionnées lors de l'étape 134.

On suppose ici que le terminal 8 écoute uniquement l'adresse @SSP1 de l'opérateur 20.

En écoutant cette adresse, lors d'une étape 138, le terminal reçoit le message SSP diffusé par l'opérateur 20.

En réponse à ce message SSP, lors d'une étape 140, le terminal enregistre la table contenue dans le message SSP reçu. La table peut être enregistrée à chaque réception ou uniquement quand son contenu a changé par rapport à sa dernière diffusion.. Les valeurs des indicateurs contenus dans la table enregistrée sont utilisées lors de traitements spéciaux.

Les adresses unicast @IP1 et @IP2 contenues dans la colonne 118 sont, quant à elles, utilisées pour établir une connexion point-à-point avec le serveur correspondant à ces adresses unicast.

En réponse à la réception de l'adresse @PMP1, lors d'une étape 142, le terminal 8 se met à écouter cette adresse de service.

Lors d'une étape 144, le terminal reçoit les messages PMP en écoutant l'adresse @PMP1. Par exemple, le terminal reçoit une requête de connexion. Ensuite, lors d'une étape 146, le terminal vérifie que cette requête de connexion est bien générée par l'opérateur 20 et qu'elle lui est destinée. Par exemple, lors de l'étape 146, le terminal vérifie :
- que l'identifiant d'opérateur contenu dans cette requête correspond bien à l'un de ceux enregistrés dans sa liste 62, et
- que l'identifiant de terminal contenu dans la requête correspond à son propre identifiant de terminal.

Dans le cas contraire, le procédé retourne à l'étape 142 et dans l'affirmative, le terminal procède à une étape 148 d'établissement d'une connexion point-à-point.

Lors de l'étape 148, le terminal établit une connexion point-à-point vers un serveur de l'opérateur 20. Pour établir cette liaison point-à-point, le terminal utilise l'une des adresses unicast contenues dans la table enregistrée lors de l'étape 140 correspondant au service spécifié dans la requête de connexion.

Une fois que cette liaison point-à-point est établie, lors d'une étape 150, un échange de données bidirectionnel entre le terminal et le serveur contacté est exécuté. Cet échange bidirectionnel de données peut, par exemple, avoir pour but de fournir au terminal 8 les secrets qui lui permettront de désembrouiller les programmes multimédias embrouillés reçus.

En parallèle aux étapes 130 à 150, le terminal procédé également à la réception des programmes multimédias embrouillés diffusés. Pour cela, lors d'une étape 160, le terminal écoute une adresse multicast de diffusion puis le module 46 démultiplexe le contenu multiplexé reçu. Ensuite, lors d'une étape 162, le message ECM du contenu multiplexé est transmis au processeur 42 qui, lors d'une étape 168, obtient le mot de contrôle CW en déchiffrant le cryptogramme CW*.

Le processeur envoie ensuite le mot de contrôle CW au module 46 qui, lors d'une étape 170, désembrouille le programme multimédia embrouillé avec le mot de contrôle reçu.

Le programme multimédia désembrouillé est ensuite décodé, lors d'une étape 172, par le module 46 afin de générer un flux multimédia lors d'une étape 174, ce flux multimédia est transmis à l'écran 52 qui l'affiche en clair. Les étapes 172 et 174 constituent un exemple d'utilisation du programme multimédia désembrouillé.

Le procédé de la figure 2 permet de construire pour chaque opérateur une arborescence d'adresses multicast de service telle qu'illustrée sur la figure 5. Dans cette arborescence, l'adresse @ASP est le noeud racine. Les adresses @SSP1 et @SSP2 sont les noeuds fils de premier niveau et les adresses @PMP1 et @PMP2 sont les noeuds fils de second niveau respectivement rattachés aux adresses @SSP1 et @SSP2.

Le procédé de la figure 2 permet bien sûr de construire des arborescences d'adresses multicast de service contenant plus de deux adresses multicast de service de premier niveau et plus d'une adresse multicast de service de second niveau associée à chaque noeud père.

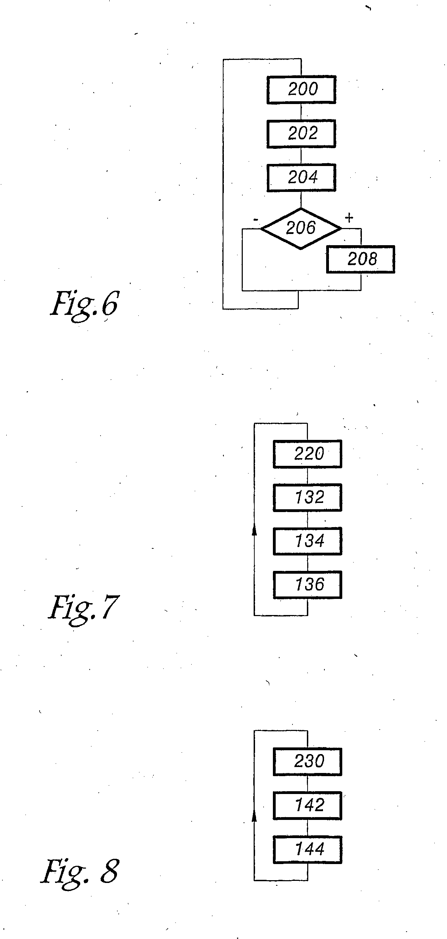

La figure 6 représente un organigramme d'un procédé pour modifier l'adresse @ASP dans chacun des terminaux du système 2.

Initialement, lors d'une étape 200, la tête de réseau diffuse les messages ASP à la fois sur l'ancienne adresse @ASP notée ici @ASP_{old} et sur une nouvelle adresse @ASP notée ici @ASP_{new}. L'étape 200 permet de faire fonctionner le procédé de la figure 2 sur un parc hétérogène de terminaux dans lesquels une partie des terminaux utilisent l'adresse @ASP_{old} et l'autre partie des terminaux utilisent l'adresse @ASP_{new}.

Ensuite, lors d'une étape 202, un message EMM de modification de l'adresse de référence est envoyé à chacun des terminaux. Ce message EMM peut être incorporé dans le contenu multiplexé reçu par ce terminal ou envoyé dans un message de service généré par le générateur 16. Ce message EMM contient la nouvelle adresse @ASP_{new}.

En réponse, lors d'une étape 204, chaque terminal enregistre la nouvelle adresse @ASP_{new} à la place de l'ancienne adresse @ASP_{old}.

Puis, lors d'une étape 206, le récepteur 40 vérifie que la nouvelle adresse a été correctement enregistrée en testant la valeur d'un indicateur de mise à jour. La valeur de cet indicateur de mise à jour est modifié par le processeur 42 en cas de succès de l'enregistrement de la nouvelle adresse @ASP_{new}. Dans le cas où la valeur de cet indicateur indique que la mise à jour a été réussie, le terminal procède à une étape 208 d'écoute de la nouvelle adresse @ASP_{new} et n'écoute plus l'ancienne adresse @ASP_{old}.

Dans le cas où, lors de l'étape 206, la valeur de l'indicateur indique que la mise à jour n'a pas été réussie, le terminal ne procède pas à l'étape 208 et continue d'écouter l'adresse @ASP_{old}.

Dans tous les cas, après l'étape 206 ou l'étape 208, le procédé retourne à l'étape 200.

Le fonctionnement du terminal 8 pour mettre à jour l'adresse @SSP1 va maintenant être décrit en regard de la figure 7.

Initialement, en réponse à une modification de l'adresse @SSP1 contenue dans le message ASP, lors d'une étape 220, le module 48 arrête d'écouter les adresses multicast de premier niveau (@SSP1) ainsi que les adresses multicast de niveaux supérieurs, telle que l'adresse @PMP1.

Ensuite, le procédé se poursuit par les étapes 132, 134 et 136, telles que décrites en regard de la figure 2.

Le fonctionnement du terminal 8 lorsque celui-ci reçoit un message SSP lui indiquant une nouvelle adresse @PMP1_{new} va maintenant être décrit en regard de la figure 8.

Initialement, lors d'une étape 230, en réponse à la réception de cette nouvelle adresse @PMP1_{new}, le module 48 arrête d'écouter l'ancienne adresse @PMP1_{old}. Ensuite, le procédé se poursuit par les étapes 142 et 144 décrites en regard de la figure 2.

De nombreux autres modes de réalisation sont possibles. Par exemple, d'autres réseaux qu'un réseau utilisant le protocole IP peuvent être utilisés à la place du réseau 30 à partir du moment où ce réseau permet l'utilisation d'adresses multicast d'une façon similaire à ce que permet le protocole IP.

Le processeur de sécurité 42 peut être intégré au récepteur 40. En variante, les modules 46 et 48 peuvent être implémentés dans un module amovible.

Les différentes fonctionnalités du terminal 8 peuvent être réparties entre différents équipements reliés entre eux par un réseau local. Par exemple, ces différentes fonctionnalités peuvent être réparties entre une passerelle locale appelée « Home Gateway » et un décodeur local, l'un ou l'autre pouvant recevoir le processeur de sécurité 42. La passerelle est alors l'élément connecté au réseau 30 qui écoute les différentes adresses multicast. Ensuite, les informations reçues à partir du réseau 30 sont transmises, sur le réseau local, au décodeur local. Dans une telle architecture, la passerelle peut, par exemple, prendre en charge le traitement des messages ECM afin d'en extraire les mots de contrôle nécessaires au désembrouillage des programmes multimédias embrouillés. D'autres architectures pour le terminal 8 sont bien évidemment possibles.

Les adresses multicast de premier niveau et de niveaux supérieurs peuvent être des adresses IP fixes ou affectées dynamiquement à l'aide du procédé de la figure 2. Les adresses @SSP1 et @SSP2 peuvent être identiques. Le terminal distingue alors les messages de service qui lui sont destinés à l'aide d'un identifiant de l'opérateur contenu dans les messages SSP. De façon similaire, les adresses multicast de service de second niveau peuvent être identiques entre elles et également identiques aux adresses multicast de service de premier niveau. La distinction des messages de service destinés au terminal 8 de ceux qui ne lui sont pas destinés se fait alors également grâce à l'utilisation des identifiants d'opérateurs inclus dans les messages SSP et PMP. L'adresse @ASP peut également être identique ou différente des adresses multicast de service utilisées.

Le modem 44 peut être intégré dans le récepteur 40 ou être placé à l'extérieur.

L'adresse @ASP est, en variante, enregistrée dans le récepteur 40 au lieu d'être enregistrée dans le processeur de sécurité 42.

Le procédé de la figure 2 a été décrit dans le cas particulier où l'arborescence de la figure 5 comporte trois niveaux. Dans une version simplifiée, seuls deux niveaux sont mis en oeuvre, c'est-à-dire l'utilisation de l'adresse @ASP et l'utilisation d'adresses multicast de service de premier niveau. En variante, plus de trois niveaux peuvent également être utilisés. Cette dernière variante permet d'affecter différentes adresses multicast de service, typiquement selon les types de messages de service et/ou l'organisation en parc des terminaux.

Si chaque opérateur de service utilise un jeu d'adresses multicast de service différent de celui utilisé par les autres opérateurs, alors l'identifiant d'opérateurs contenu dans le tableau de la figure 4 peut être omis. De même, l'identifiant d'opérateur contenu dans les messages de service SSP, PMP peuvent être omis.

La description de l'opérateur ou du service contenue dans les colonnes 108 et 120, respectivement, peut être omise.

## Revendications

1. Procédé de diffusion de plusieurs programmes multimédias générés par des opérateurs de service différents, par une ou plusieurs têtes de réseau d'un réseau large bande dans lequel une information peut être acheminée vers une adresse multicast, de sorte que seul un groupe de plusieurs terminaux correspondant à cette adresse multicast reçoit l'information tandis que d'autres terminaux connectés au même réseau ne reçoivent pas cette information, et dans lequel :
- chaque tête de réseau multiplexe (en 88) au moins un programme multimédia embrouillé à l'aide d'un mot de contrôle et un cryptogramme de ce mot de contrôle afin d'obtenir un contenu multiplexe, puis diffuse le contenu multiplexe vers une adresse multicast de diffusion, cette adresse multicast de diffusion permettant d'établir une liaison point à multipoint entre cette tête de réseau et les terminaux correspondants par l'intermédiaire du réseau, et
- une ou plusieurs têtes de réseau diffusent (en 122, 126) en parallèle, sur au moins une adresse multicast de service, des messages de service, propres à chaque opérateur de service, permettant d'adapter le fonctionnement de chaque terminal correspondant pour que celui-ci soit capable de désembrouiller et d'utiliser le programme multimédia diffusé ou, au contraire, inhiber cette capacité,
**caractérisé en ce que** la ou plusieurs des têtes de réseau diffusent (en 102) sur une adresse multicast de référence (@ASP) une liste associant des identifiants des opérateurs de service à au moins une adresse multicast de service de premier niveau (@SSP1), l'adresse multicast de référence étant connue au préalable de tous les terminaux correspondants aptes à recevoir et à démultiplexer les contenus multiplexes diffusés et cette adresse multicast de référence étant différente de toutes les adresses multicast de diffusion.

2. Procédé selon la revendication 1, dans lequel la ou plusieurs des têtes de réseau diffusent (en 102) sur l'adresse multicast de référence (@ASP) une liste dans laquelle au moins une adresse multicast de service de premier niveau associée à un identifiant d'opérateur est différente des autres adresses multicast de service de premier niveau associées à d'autres opérateurs de service.

3. Procédé selon l'une quelconque des revendications précédentes, dans lequel la ou les têtes de réseau diffusent (en 122) sur au moins l'une des adresses multicast de service de premier niveau associée à un identifiant d'opérateur de service, une table (figure 4) définissant au moins une adresse multicast de service de second niveau utilisée par cet opérateur.

4. Procédé de réception de plusieurs programmes multimédias diffusés à l'aide d'un procédé de diffusion conforme à l'une quelconque des revendications précédentes, et dans lequel :
- chaque terminal reçoit (en 160) le contenu multiplexe en écoutant une adresse multicast de diffusion démultiplexe le contenu multiplexe, puis, sous réserve d'y être autorisé, le terminal déchiffre (en 168) le cryptogramme du mot de contrôle, désembrouille (en 170) le programme multimédia et utilise (en 172) ce programme multimédia désembrouille, le terminal étant équipé d'une mémoire et étant apte à écouter simultanément plusieurs adresses multicast, et
- chaque terminal reçoit (en 138, 144) les messages de service en écoutant la ou plusieurs des adresses multicast de service puis, en fonction du contenu du message de service reçu, le terminal adapte son fonctionnement de manière à être capable de désembrouiller et utiliser le programme multimédia diffusé ou, au contraire, d'inhiber cette capacité,
**caractérisé en ce que** en réponse à la diffusion de la liste sur l'adresse multicast de référence, le terminal écoute (en 134) une ou plusieurs des adresses multicast de service de premier niveau spécifiées dans cette liste pour recevoir des messages de service.

5. Procédé selon la revendication 4 pour recevoir des programmes multimédias diffusés selon un procédé conforme à la revendication 2, dans lequel le terminal sélectionne (en 134) dans la liste la ou les adresses multicast de service de premier niveau correspondant à un identifiant d'opérateur de service préenregistré dans sa mémoire, puis écoute (en 136) les adresses multicast de service de premier niveau sélectionnées pour recevoir des messages de service et n'écoute pas les adresses multicast de service de premier niveau non sélectionnées dans cette liste.

6. Procédé selon la revendication 4 ou 5 pour recevoir des programmes multimédias diffusés à l'aide d'un procédé conforme à la revendication 3, dans lequel, en réponse à la diffusion de la table, le terminal écoute (en 142) une ou plusieurs des adresses multicast de service de second niveau spécifiées dans cette table.

7. Procédé selon l'une quelconque des revendications précédentes, dans lequel les adresses multicast de service de premier ou de second niveau sont également toutes différentes des adresses multicast de diffusion.

8. Procédé selon l'une quelconque des revendications précédentes, dans lequel le réseau large bande est un réseau IP (Internet Protocol).

9. Terminal de réception de programmes multimédias embrouillés, **caractérisé en ce qu'**il comporte un module logiciel de contrôle d'accès (48) apte à mettre en oeuvre un procédé de réception conforme à l'une quelconque des revendications 4 à 8.

10. Tête de réseau apte à diffuser des programmes multimédias embrouillés, **caractérisée en ce que** cette tête de réseau est apte à mettre en oeuvre un procédé de diffusion conforme à l'une quelconque des revendications 1 à 3 et 7 à 8.

## Patentansprüche

1. Verfahren zur Verbreitung mehrerer von verschiedenen Dienstbetreibern generierter Multimediaprogramme über ein oder mehrere Netzkopfende/n eines Breitbandnetzes, in dem eine Information so zu einer Multicast-Adresse geleitet werden kann, dass nur eine Gruppe mehrerer Endgeräte, die dieser Multicast-Adresse entsprechen, die Information empfängt, während andere an dasselbe Netz angeschlossene Endgeräte diese Information nicht empfangen, und in dem:
- jedes Netzkopfende mindestens ein Multimediaprogramm multiplext (in 88), das mittels eines Steuerworts und eines Kryptogramms dieses Steuerworts verwürfelt ist, um einen Multiplex-Inhalt zu erhalten, dann den Multiplex-Inhalt zu einer Verbreitungs-Multicast-Adresse weiterleitet, wobei es diese Verbreitungs-Multicast-Adresse ermöglicht, mittels des Netzes eine Punkt-zu-Mehrpunkt-Verbindung zwischen diesem Netzkopfende und den entsprechenden Endgeräten herzustellen, und
- ein oder mehrere Netzkopfende/n über mindestens eine Dienst-Multicast-Adresse parallel jedem Dienstbetreiber eigene Dienstnachrichten verbreitet bzw. verbreiten (in 122, 126), die es ermöglichen, den Funktionsablauf jedes entsprechenden Endgeräts anzupassen, damit dieses das verbreitete Multimedia-Programm entwürfeln und nutzen oder im Gegenteil diese Befähigung sperren kann,
**dadurch gekennzeichnet, dass** das oder die Netzkopfende/n über eine Referenz-Multicast-Adresse (@ASP) eine Liste verbreitet bzw. verbreiten (in 102), welche die Kennungen der Dienstbetreiber mit mindestens einer Dienst-Multicast-Adresse erster Ebene (@SSP1) assoziieren, wobei die Referenz-Multicast-Adresse vorab allen entsprechenden Endgeräten bekannt ist, welche die verbreiteten Multiplex-Inhalte empfangen und demultiplext können, und wobei sich diese Referenz-Multicast-Adresse von allen Verbreitungs-Multicast-Adressen unterscheidet.

2. Verfahren nach Anspruch 1, bei dem das oder die Netzkopfende/n über die Referenz-Multicast-Adresse (@ASP) eine Liste verbreitet bzw. verbreiten (in 102), in der sich mindestens eine Dienst-Multicast-Adresse erster Ebene, die mit einer Betreiberkennung assoziiert ist, von anderen Dienst-Multicast-Adressen erster Ebene unterscheidet, die mit anderen Dienstbetreibern assoziiert sind.

3. Verfahren nach einem der vorhergehenden Ansprüche, bei dem das oder die Netzkopfende/n über mindestes eine der Dienst-Multicast-Adresse erster Ebene, die mit einer Dienstbetreiberkennung assoziiert ist, eine Tabelle (Figur 4) verbreitet bzw. verbreiten (in 122), die mindestens eine von diesem Betreiber genutzte Dienst-Multicast-Adresse zweiter Ebene definiert.

4. Verfahren zum Empfangen mehrerer mittels eines Verbreitungsverfahrens nach einem der vorhergehenden Ansprüche verbreiteter Multimediaprogramme, und bei dem:
- jedes Endgerät den Multiplex-Inhalt durch Abhören einer Verbreitungs-Multicast-Adresse empfängt, den Multiplex-Inhalt demultiplext (in 160), dann, unter dem Vorbehalt, dazu autorisiert zu sein, entschlüsselt (in 168)das Endgerät das Kryptogramm des Steuerworts, entwürfelt (in 170)das Multimediaprogramm und nutzt (in 172)dieses entwürfelte Multimediaprogramm, wobei das Endgerät mit einem Speicher ausgerüstet ist und gleichzeitig mehrere Multicast-Adressen abhören kann, und
- jedes Endgerät die Dienstnachrichten durch Abhören der oder mehrere Dienst-Multicast-Adresse/n empfängt (in 138, 144), dann das Endgerät in Abhängigkeit vom Inhalt der empfangenen Dienstnachricht seinen Funktionsablauf anpasst, um das verbreitete Multimediaprogramm entwürfeln und nutzen oder im Gegenteil diese Befähigung sperren zu können,
**dadurch gekennzeichnet, dass** als Antwort auf die Verbreitung der Liste über die Referenz-Multicast-Adresse das Endgerät eine oder mehrere Dienst-Multicast-Adresse/n erster Ebene abhört (in 134), die in dieser Liste angegeben ist bzw. sind, um Dienstnachrichten zu empfangen.

5. Verfahren nach Anspruch 4 zum Empfangen von gemäß einem Verfahren nach Anspruch 2 verbreiteten Multimediaprogrammen, bei dem das Endgerät aus der Liste die Dienst-Multicast-Adresse/n erster Ebene auswählt (in 134), die in seinem Speicher voreingespeicherten Dienstbetreiberkennung entspricht bzw. entsprechen, dann die ausgewähltem Dienst-Multicast-Adressen erster Ebene abhört (in 136), um Dienstnachrichten zu empfangen, und die aus dieser Liste nicht ausgewählten Dienst-Multicast-Adressen erster Ebene nicht abhört.

6. Verfahren nach Anspruch 4 oder 5 zum Empfangen von mittels einem Verfahren nach Anspruch 3 verbreiteten Multimediaprogrammen, bei dem als Antwort auf die Verbreitung der Tabelle das Endgerät eine oder mehrere der in dieser Tabelle aufgeführten Dienst-Multicast-Adressen zweiter Ebene abhört (in 142).

7. Verfahren nach einem der vorhergehenden Ansprüche, bei dem sich die Dienst-Multicast-Adressen erster Ebene oder zweiter Ebene allesamt auch von den Verbreitungs-Multicast-Adressen unterscheiden.

8. Verfahren nach einem der vorhergehenden Ansprüche, bei dem das Breitbandnetz ein IP-(Internet Protokoll)-Netz ist.

9. Endgerät zum Empfangen verwürfelter Multimediaprogramme, **dadurch gekennzeichnet, dass** es ein Zugriffskontroll-Softwaremodul (48) umfasst, das ein Empfangsverfahren nach einem der Ansprüche 4 bis 8 umsetzen kann.

10. Netzkopfende, das verwürfelte Multimediaprogramme verbreiten kann, **dadurch gekennzeichnet, dass** das Netzkopfende ein Verbreitungsverfahren nach einem der Ansprüche 1 bis 3 und 7 bis 8 umsetzen kann.

## Claims

1. A method of broadcasting multimedia programs generated by different service operators by one or several network head ends of a broadband network in which information can be routed to a multicast address so that only one group of terminals corresponding to that multicast address receives the information whereas other terminals connected to the same network do not receive that information, in which method:
• each network head end multiplexes (step 88) a multimedia program scrambled using a control word and a cryptogram of that control word in order to obtain a multiplexed content and then broadcasts the multiplexed content to a broadcast multicast address used to set up a point-to-point multipoint connection between the network head end and the corresponding terminals via the network; and
• one or more network head ends broadcast(s) service messages specific to each service operator in parallel (steps 122, 126) to one or more service multicast addresses to adapt the operation of each corresponding terminal so that it is capable of descrambling and using the broadcast multimedia program or, to the contrary, to disable that capability;
• the method being **characterized in that** the network head end(s) broadcast(s) (step 102) to a reference multicast address (@ASP) a list associating service operator identifiers with one or more first-level service multicast addresses (@SSP1), the reference multicast address being known beforehand to all corresponding terminals adapted to receive and demultiplex the broadcast multiplexed contents and that reference multicast address being different from all the broadcast multicast addresses.

2. A method according to claim 1, wherein the network head end(s) broadcast(s) (step 102) to the reference multicast address (@ASP) a list in which one or more first-level service multicast addresses associated with an operator identifier differ(s) from the other first-level service multicast addresses associated with other service operators.

3. A method according to either preceding claim, wherein the network head end(s) broadcast(s) (step 122) to one or more first-level service multicast addresses associated with a service operator identifier a table (Figure 4) defining one or more second-level service multicast addresses used by that operator.

4. A method of receiving multimedia programs broadcast by means of a broadcasting method according to any preceding claim, in which method:
• each terminal receives (step 160) the multiplexed content by listening at a broadcast multicast address, demultiplexes the multiplexed content, and then, provided that it is authorized to do so, decrypts (step 168) the cryptogram of the control word, descrambles (step 170) the multimedia program, and uses the descrambled multimedia program (step 172), the terminal including a memory and being adapted to listen simultaneously at a number of multicast addresses; and
• each terminal receives (steps 138, 144) service messages by listening at the service multicast address(es) as a function of the content of the service message received and the terminal adapts its operation so as to be capable of descrambling and using the broadcast multimedia program or, to the contrary, to disable that capability;
• the method being **characterized in that** in response to broadcasting the list to the reference multicast address, the terminal listens (step 134) at one or more first-level service multicast addresses specified **in that** list to receive service messages.

5. A method according to claim 4 for receiving multimedia programs broadcast using a method according to claim 2, wherein the terminal selects (step 134) in the list the first-level service multicast address(es) corresponding to a service operator identifier prestored in its memory, then listens (step 136) at the selected first-level service multicast addresses to receive service messages and does not listen at the first-level service multicast addresses not selected from this list.

6. A method according to claim 4 or claim 5 for receiving multimedia programs broadcast using a method according to claim 3, wherein, in response to the broadcasting of the table, the terminal listens (step 142) at one or more second-level service multicast addresses specified in that table.

7. A method according to any preceding claim, wherein the first- or second-level service multicast addresses are also all different from the broadcast multicast addresses.

8. A method according to any preceding claim, wherein the broadband network is an IP (Internet Protocol) network.

9. A terminal for receiving scrambled multimedia programs, **characterized in that** it includes an access control software module (48) adapted to implement a reception method according to any one of claims 4 to 8.

10. A network head end adapted to broadcast scrambled multimedia programs, **characterized in that** it is adapted to use a broadcasting method according to any one of claims 1 to 3 and 7 to 8.
